(19) Europäisches Patentamt
European Patent Office
Office européen des brevets

(11) **EP 2 498 099 A1**

(12) **EUROPÄISCHE PATENTANMELDUNG**

(43) Veröffentlichungstag:
**12.09.2012  Patentblatt 2012/37**

(51) Int Cl.:
**G01S 1/12** (2006.01)    **G01S 1/64** (2006.01)
**G01S 1/82** (2006.01)

(21) Anmeldenummer: **12158548.3**

(22) Anmeldetag: **08.03.2012**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **08.03.2011   DE 102011013294**

(71) Anmelder: **Höft & Wessell Aktiengesellschaft
30659 Hannover (DE)**

(72) Erfinder: **Müller, Andreas
31319 Sehnde (DE)**

(74) Vertreter: **Einsel, Martin
Patentanwälte Einsel & Kollegen
Jasperallee 1a
38102 Braunschweig (DE)**

(54) **Verfahren und Anordnung zur Erzeugung eines richtungsabhängig modulierten Signals sowie Verfahren und Anordnung zur Bestimmung des Richtungswinkels aus einem derart richtungsabhängig modulierten Signal und damit arbeitendes optisches Ortungssystem**

(57)     Die Erfindung betrifft ein Verfahren zur Erzeugung eines Sendesignals mit richtungsabhängiger Modulation, ein Verfahren zur Bestimmung des Richtungswinkels aus einem gemäß einem erfindungsgemäßen Verfahren erzeugten richtungsabhängig modulierten Signal, eine Anordnung zur Erzeugung eines erfindungsgemäßen richtungsabhängig modulierten Signals und eine Anordnung zur Bestimmung des Richtungswinkels, insbesondere gemäß dem erfindungsgemäßen Verfahren zur Bestimmung des Richtungswinkels aus einem gemäß einem erfindungsgemäßen Verfahren erzeugten richtungsabhängig modulierten Signal sowie einem Ortungssystem zur Positionsbestimmung eines Objektes, Körpers und/oder einer Person innerhalb eines Ortungsbereiches, besonders anwendbar in geschlossenen Räumen.

Fig. 1

**Beschreibung**

Die Erfindung betrifft ein Verfahren zur Erzeugung eines Sendesignals mit richtungsabhängiger Modulation, ein Verfahren zur Bestimmung des Richtungswinkels aus einem gemäß einem erfindungsgemäßen Verfahren erzeugten richtungsabhängig modulierten Signals, eine Anordnung zur Erzeugung eines erfindungsgemäßen richtungsabhängig modulierten Signals und eine Anordnung zur Bestimmung des Richtungswinkels, insbesondere gemäß dem erfindungsgemäßen Verfahren zur Bestimmung des Richtungswinkels aus einem erfindungsgemäßen Verfahren erzeugten richtungsabhängig modulierten Signals sowie einem Ortungssystem zur Positionsbestimmung eines Objektes, Körpers und/oder einer Person innerhalb eines Ortungsbereiches, besonders anwendbar in geschlossenen Räumen.

Zur Ortung von Personen oder Waren gibt es bekannte Verfahren aus der Satellitenkommunikation. Beispielsweise ist im Stand der Technik ein globales Navigationssatellitensystem bekannt, wobei dieses System zur Positionsbestimmung und Navigation auf der Erde und in der Luft dient. Hierbei werden von Navigationsgeräten in den zu navigierenden Fahrzeugen oder Objekten durch entsprechend vorgesehene Navigationssatelliten und Pseudoliten empfangene Signale verarbeitet, wobei die Signale der Satelliten deren genaue Position und Uhrzeit beinhalten. Zur Positionsbestimmung muss ein Empfänger die Signale von mindestens vier Satelliten gleichzeitig empfangen. Im Empfangsgerät werden die Pseudo-Signallaufzeiten, von den Satelliten zur Empfangsantenne inklusive Uhrenfehler des Empfängers, gemessen und daraus die aktuelle Position inklusive der Höhe und der Uhrenfehler ermittelt.

Diese Verfahren sind allerdings nicht in allen Fällen einsetzbar, insbesondere nicht bei einer Navigation in geschlossenen Räumen, da die Satellitensignale dort nicht empfangbar sind. Selbst neuartige Empfangsgeräte, die in Räume hinein reflektierte Signale empfangen und auswerten können sind beispielsweise in größeren Einkaufsmärkten, wie beispielsweise Supermärkten oder Möbelhäusern nicht mehr in der Lage eine erfolgreiche Positionsbestimmung durchzuführen.

Der vorliegenden Erfindung liegt das Problem zugrunde, innerhalb geschlossener Gebäude, Hallen und dgl. eine Navigation zu ermöglichen. Die zuvor angeführten Probleme sollen überwunden werden.

Das wesentliche Merkmal der Erfindung stellt die die Erzeugung eines Sendesignals mit richtungsabhängiger Modulation dar, wobei ein Empfänger, der aus einem speziellen Sendersignal einen Richtungswinkel zum Sender bestimmt, wodurch letztendlich eine Positionsbestimmung möglich wird.

Diese Gedanken finden etwa in einem System zur Positionsbestimmung ihre Anwendung. Man benötigt dann mehrere Sender, im Folgenden auch als Sendebaken oder Baken bezeichnet, an verschiedenen Orten, die dem Empfänger bekannt gemacht werden. Wenn der Empfänger dann mit dem beschriebenen Verfahren die Richtungswinkel bezüglich der Sender misst, kann er auf dem Weg der Triangulation, also anhand eines an sich bekannten Verfahrens, seinen Standort bestimmen.

Das Grundprinzip der Triangulation für den zweidimensionalen Fall ergibt sich, wenn von zwei verschiedenen Stationen der zu bestimmende Zielpunkt angepeilt wird, wobei man die beiden Winkel $\alpha$ und $\beta$ mit der Genauigkeit $\Delta\alpha$ und $\Delta\beta$ erhält. Unter Kenntnis der Basislänge b kann man dann die Koordinatendes angepeilten Punktes relativ zu einem Koordinatenursprung bestimmen. Das Messvolumen des Gesamtsystems ist das Schnittvolumen der Messvolumina der Einzel-Messsysteme. Von zwei Punkten auf einer Geraden, wobei deren Abstand bekannt ist, können Winkelmessungen zu beliebig anderen Punkten im Raum erfolgen, um auf diese Weise deren Lage eindeutig zu bezeichnen.

Erste Tests der erfindungsgemäßen Verfahren mittels einer Laborimplementierung basierend auf Infrarotlicht als Trägermedium haben sich als sehr erfolgreich gezeigt.

Bei dieser konkret getesteten Implementierung werden die erfindungsgemäß eingesetzten komplexen Verstärkungsfaktoren als kanalindividuelle Verzögerungszeiten ausgeführt. Der Vorteil dieser Implementierung liegt darin, dass zur Demodulation des Signals im Empfänger ein handelsüblicher Infrarot-Fernbedienungsempfänger eingesetzt werden kann. Dies ist ein sehr günstiger IC, integrierter Schaltkreis. Die nachfolgende Verarbeitung in einem Optimalfilter, einem sogenannten Matched Filter findet in Software statt, die auf einem 8-bit Mikrokontroller in Versuchen implementiert wurde. Unter einem Optimalfilter versteht man in der Nachrichtentechnik ein Filter, das das Signal-Rausch-Verhältnis optimiert. Das Optimalfilter dient zur optimalen Bestimmung des Vorhandenseins, der Detektion der Amplitude oder der Lage einer bekannten Signalform in Gegenwart von weißem Rauschen (Parameterschätzung). Die gesamte Lösung ist daher sehr kostengünstig implementierbar.

Es wird ein Verfahren in folgender Grundanordnung beschrieben. Ein Sender S strahlt ein richtungsabhängig moduliertes Signal $x(t,\varphi)$ aus. Ein Empfänger E empfängt dieses Signal, nachdem es ein Übertragungsmedium U durchlaufen hat, und bestimmt aus diesem Signal $y(t,\varphi_0)$ seinen eigenen Richtungswinkel $\varphi_0$ relativ zu S.

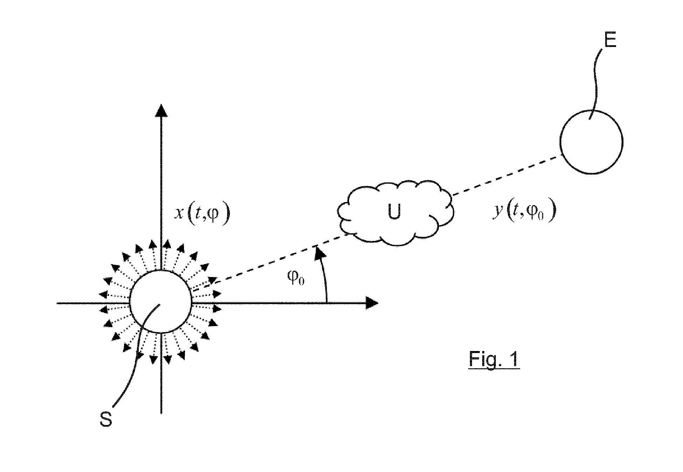

Dies ist besonders gut in der Figur 1 zu erkennen, die eine Grundanordnung des Systems darstellt.

Die Anordnung wird als ein zweidimensionales Problem modelliert. Sie lässt sich auf ein dreidimensionales Problem erweitern, indem man eine dritte Koordinatenachse senkrecht zur Zeichnungsfläche einführt. $\varphi_0$ ist dann als Winkel zwischen zwei auf der Zeichnungsfläche senkrecht stehenden Ebenen zu verstehen.

Das Verfahren bildet die z.B. die Grundlage für ein System, mit dessen Hilfe ein Empfänger seine Position bezüglich eines Koordinatensystems (je nach Anwendung 2- oder 3-dimensional) bestimmen kann. Hierzu sind dann mehrere Sender, sogenannte Positionsbaken, erforderlich, deren Position und Ausrichtung bezüglich des Koordinatensystems bekannt sind. Anwendung des Systems ist z.B. die Navigation innerhalb geschlossener Räume, wie Lager- oder Messehallen, Warenhäuser oder Einkaufszentren. In geschlossenen Räumen sind bekannte Verfahren der Satellitenkommunikation nicht einsetzbar, da die Satellitensignale dort nicht empfangbar sind.

Beschrieben wird ein neuartiges Verfahren zur Erzeugung eines richtungsabhängig modulierten Signals und ein korrespondierendes Verfahren zur Bestimmung der Richtung aus dem Empfangssignal. Das Sendesignal entsteht durch additive Überlagerung der Einzelsignale einer Anzahl von Kanälen mit richtungsabhängiger Abstrahlcharakteristik.

Grundsätzlich ist das Verfahren unabhängig von der speziellen Wahl des Trägermediums. Hierbei kann es sich z.B. um elektromagnetische Wellen, Licht oder auch (Ultra-)Schallwellen handeln.

Für eine Darstellung der Theorie des Verfahrens wird das Sendesignal als modulierter Sinusträger angenommen. Ein solcher lässt sich mathematisch als Realteil eines komplexen Signals beschreiben

$$x_s(t) = \mathrm{Re}\left\{x(t)e^{j2\pi f_c t}\right\}$$

Hierbei bezeichnet $j = \sqrt{-1}$ die imaginäre Einheit und $f_c$ die Trägerfrequenz. Die i. allg. komplexwertige Funktion $x(t)$ heißt komplexe Einhüllende oder Basisbandsignal zu $x_s(t)$. Im Folgenden werden alle Signale im Basisband beschrieben.

Das Sendesignal besteht aus der additiven Überlagerung von $NI$ sog. Kanälen mit jeweils eigener Sendevorrichtung V[i,n] und richtungsabhängiger Abstrahlcharakteristik. Die Hauptstrahlrichtungen der Kanäle seien

$$\varphi[i,n] = \frac{2\pi(i+nI)}{NI};\quad i = 0,...,I\text{-}1;\ n = 0,...,N\text{-}1.$$ Das lässt sich z.B. erreichen, indem die Sendevorrichtungen auf einem Kreis angeordnet werden und radial ausgerichtet sind. Für jeden Kanal wird das von einem zentralen Signalgenerator G erzeugte Signal einer individuellen Konditionierung W unterzogen.

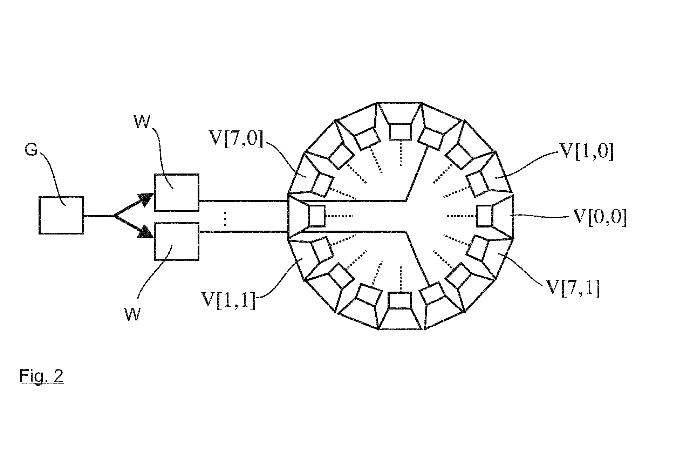

In der Figur 2 ist eine beispielhafte Anordnung der Sendervorrichtungen (I=8; N=2) gezeigt.

Die Abstrahlcharakteristik $a[i,n](\varphi)$ eines Kanals, d.h. seine richtungsabhängige Dämpfung, werde beschrieben durch eine reellwertige zur Hauptstrahlrichtung symmetrische Funktion. Es gelte $a[i,n](\varphi)=a(\varphi-\varphi[i,n])$, d.h. alle Kanäle haben im Prinzip die gleiche Charakteristik und unterscheiden sich nur in ihren Hauptstrahlrichtungen. $a(\varphi)$ ist eine gerade Funktion und $2\pi$-periodisch in $\varphi$.

Die Sendesignale $x[i,n](t)$ der einzelnen Kanäle entstehen aus einem komplexen Ausgangssignal $x(t)$, das von einem zentralen Signalgenerator G erzeugt wird. Dieses kann man sich zusammengesetzt denken aus $MI$ nicht überlappenden Zeitabschnitten $k=0...I\text{-}1$; $m=0...M\text{-}1$, die auch unterschiedliche Länge haben können. Jedes Teilsignal $x_{k,m}(t)$ sei außerhalb des zugehörigen Zeitabschnitts identisch null. Es gilt folglich

$$x(t) = \sum_{m=0}^{M-1}\sum_{k=0}^{I-1} x_{k,m}(t)$$

Die Sendesignale $x[i,n](t)$ entstehen aus $x(t)$ durch kanalabhängige Konditionierung, konkret durch Multiplikation mit komplexen Verstärkungsfaktoren, die für verschiedene Kanäle und Zeitabschnitte unterschiedliche Werte annehmen können. Der Verstärkungsfaktor in Kanal $[i,n]$ im Zeitabschnitt $[k,m]$ werde mit $h_{k,m}[i,n]$ bezeichnet. Das Signal für einen Kanal lässt sich also folgendermaßen beschreiben:

$$x[i,n](t) = \sum_{m=0}^{M-1}\sum_{k=0}^{I-1} x_{k,m}(t)\, h_{k,m}[i,n]$$

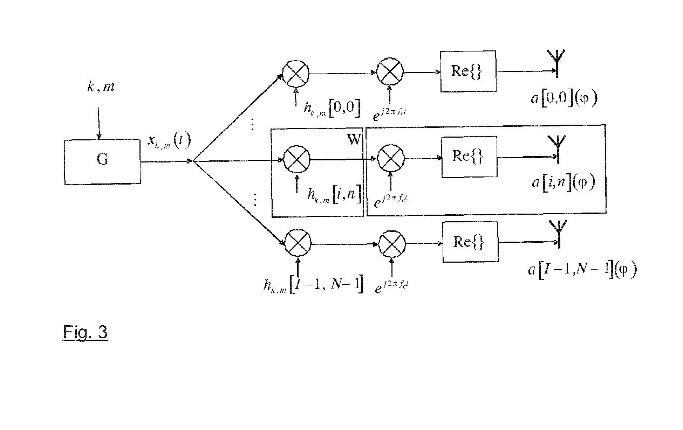

Eine hierzu passende Anordnung zur Erzeugung des Sendesignals ist in der Figur 3 dargestellt.

Das richtungsabhängige Sendesignal $x(t,\varphi)$ entsteht durch additive Überlagerung der Kanäle unter Berücksichtigung ihrer Richtcharakteristik.

$$x(t,\varphi) = \sum_{n=0}^{N-1}\sum_{i=0}^{I-1} a\left(\varphi - \frac{2\pi(i+nI)}{NI}\right)\sum_{m=0}^{M-1}\sum_{k=0}^{I-1} x_{k,m}(t) h_{k,m}[i,n] \tag{1}$$

Dies lässt sich auch in der Form

$$x(t,\varphi) = \sum_{m=0}^{M-1}\sum_{k=0}^{I-1} x_{k,m}(t) r_{k,m}(\varphi)$$

mit

$$r_{k,m}(\varphi) = \sum_{n=0}^{N-1}\sum_{i=0}^{I-1} a\left(\varphi - \frac{2\pi(i+nI)}{NI}\right) h_{k,m}[i,n] \tag{2}$$

schreiben.

Auf dem Weg vom Sender zum Empfänger durchläuft das Signal ein Übertragungsmedium, welches hier durch einen komplexen Dämpfungsfaktor $c_0$ modelliert werden soll. Der Empfänger möge sich vom Sender aus gesehen in Richtung $\varphi = \varphi_0$ befinden. Also empfängt er das Signal

$$y(t) = c_0 x(t,\varphi_0) = c_0 \sum_{m=0}^{M-1}\sum_{k=0}^{I-1} x_{k,m}(t) r_{k,m}(\varphi_0)$$

Die Teilsignale $x_{k,m}(t)$ seien nun dem Empfänger entweder a priori bekannt, oder können rekonstruiert werden. Letzteres ist z.B. dann möglich, wenn $x_{k,m}(t)$ ein digital moduliertes Signal ist, dessen Verfahren invariant gegen den Faktor $c_0\, r_{k,m}(\varphi_0)$ ist.

Dann kann der Empfänger, z.B. mittels Korrelation oder mit Hilfe eines Matched Filters aus dem Empfangssignal die Faktoren $v_{k,m}(\varphi_0) = c_0 r_{k,m}(\varphi_0)$ zurückgewinnen.

Die Aufgabe des Empfängers besteht nun darin, anhand der empfangenen $v_{k,m}$ den unbekannten Winkel $\varphi_0$ zu bestimmen. Dies ist mit dem nachfolgend beschriebenen Verfahren unter recht allgemeinen Voraussetzungen an die Funktion $a(\varphi)$ möglich, wenn die Verstärkungsfaktoren $h_{k,m}[i,n]$ geeignet gewählt werden. Sie sollen folgende Eigenschaften besitzen:

Unabhängigkeit von $n$ : Es gilt $h_{k,m}[i,n] = h_{k,m}[i]$
Verschiebungssatz: Es gilt $h_{k,m}[i] = h_m[k-i]$. Hierbei ist $h_m[k]$ k-periodisch mit Periodenlänge $I$.

Es werde folgende Modellvorstellung angenommen: $h_m[k]$ seien Abtastwerte einer kontinuierlichen Funktion $h(s)$ an den Stellen $s = \left(k + \frac{m}{M}\right)$. Die Funktion $h(s)$ soll das Abtasttheorem bezüglich der auf 1 normierten Abtastrate erfüllen, d.h. entsprechend bandbegrenzt sein.

Das bedeutet letztendlich, dass $h(s)$ durch einen Satz von $I$ Verstärkungsfaktoren $h_m[k]$ für beliebig, fest gewähltes $m$ vollständig beschrieben ist.

Von $a(\varphi)$ soll lediglich gefordert werden, dass die Funktion das Abtasttheorem bezüglich der Abtastrate $\frac{NI}{2\pi}$ erfüllt.

Aufgrund dieser Eigenschaften gilt

$$v_{k,m}(\varphi_0) = c_0 \sum_{i=0}^{I-1} b\left(\frac{2\pi i}{NI} - \varphi_0\right) h_m[k-i] \tag{3}$$

mit

$$b(\varphi) = \sum_{n=0}^{N-1} a\left(\frac{2\pi n}{N} - \varphi\right)$$

$b(\varphi)$ ist periodisch mit der Periodenlänge $\frac{2\pi}{N}$. Deshalb kann $\varphi_0$ aus Gl. (3) auch lediglich bis auf ein Vielfaches von $\frac{2\pi}{N}$ eindeutig bestimmt werden. Für die Aufgabe der Positionsbestimmung ist bspw. eine Eindeutigkeit bis auf Vielfache von $\pi$ ausreichend, weshalb $N = 2$ gewählt werden kann.

Als Summe bandbegrenzter Funktionen ist auch $b(\varphi)$ bandbegrenzt und erfüllt das Abtasttheorem bezüglich $\frac{NI}{2\pi}$. Dann kann man Gl. (3) als Faltungssumme auffassen. Betrachten wir die Funktion

$$v(s) = c_0 r(s) = c_0 \int_0^I b\left(\frac{2\pi\tau}{NI}\right) h(s - \sigma)\, d\sigma \tag{4}$$

so gilt aufgrund der Periodizität der beteiligten Funktionen für eine beliebige Verschiebung $S_0$

$$v(s - s_0) = c_0 \int_0^I b\left(\frac{2\pi(\sigma - s_0)}{NI}\right) h(s - \sigma)\, d\sigma$$

Bildet man nun wieder Abtastwerte an den *Stellen* $s = \left(k + \frac{m}{M}\right)$, *so* folgt

$$v\left(\left(k + \frac{m}{M}\right) - s_0\right) = c_0 \sum_{i=0}^{I-1} b\left(\frac{2\pi(i - s_0)}{NI}\right) h_m[k - i]$$

und, wie der Vergleich mit Gl. (3) unmittelbar aufzeigt

$$v_{k,m}(\varphi_0) = v_m\left(\left(k + \frac{m}{M}\right) - s_0\right) \text{ mit } \frac{s_0}{I} = \frac{N\varphi_0}{2\pi} \tag{5}$$

Gl. (5) ist ein wichtiges Zwischenergebnis. Die im Empfänger bestimmten $v_{k,m}$ lassen sich als Abtastwerte einer periodischen Funktion $v(s)$ interpretieren. Der Winkel $\varphi_0$ bewirkt eine Verschiebung dieser Funktion entlang der s-Achse.

Überstreicht der Winkel den Bereich $0 \le \varphi_0 < \frac{2\pi}{N}$, so verändert sich die s-Verschiebung gerade um eine Periode von $v(s)$. Man kann also $\varphi_0$ bestimmen, indem man anhand der $v_{k,m}$ zuerst die s-Verschiebung $S_0$ ermittelt.

Nun stellt sich in der Praxis die Schwierigkeit, dass in einer konkreten Empfangssituation im Allgemeinen weder der Wert von $c_0$ noch der genaue Verlauf der Abstrahlcharakteristik $a(\varphi)$ bekannt ist. Damit ist auch $v(s)$ letztendlich unbekannt.

Der neuartige Ansatz zur Lösung dieses Problems liegt darin, anstelle der $v_{k,m}$ ihre Phasen $\psi_{k,m}(\varphi_0) = arg(v_{k,m}(\varphi_0))$ zu betrachten. Diese werden analog Gl. (5) interpretiert als Abtastwerte einer Funktion $\psi(s)$. Sie ist periodisch mit Periodenlänge $I$.

An die Funktionen $h(s)$ und $a(\varphi)$ werden jetzt noch folgende Forderungen gestellt:

Der Realteil von $h(s-s_1)e^{j\gamma 1}$ mit geeignet festgelegten Konstanten $s_1$ und $\gamma_1$ sei eine gerade, ihr Imaginärteil eine ungerade Funktion. $a(\varphi)$ sei eine gerade Funktion. Damit ist auch $b(\varphi)$ eine gerade Funktion.

Dann gilt für das Ergebnis $r(s)$ der Faltungsoperation in Gl. (4): Der Realteil von $r(s-s_1)e^{j\gamma)1}$ ist eine gerade, der Imaginärteil eine ungerade Funktion. Für ihre Phase $\rho(s)=\arg(r(s))$ gilt also $\rho(s-s_1)$ ist die Summe aus einer ungeraden Funktion und der Konstanten $-\gamma_1$.

Nun gilt gemäß Gl. (4) der Zusammenhang $\psi(s)=\gamma_0+\rho(s)$ mit $\gamma_0=arg(c_0)$, d.h. $\psi(s-s_1)$ ist ebenfalls die Summe aus einer ungeraden Funktion und einer Konstanten. Berechnet man nun

$$f(s) = j\int_0^I \psi(\sigma - s)e^{-j\frac{2\pi\sigma}{I}}d\sigma \quad , \qquad (6)$$

so ist aufgrund der vorausgesetzten Symmetrieeigenschaften $f(s_1)$ reell. Weiterhin erhält man $f(s_0) = f(s_1)e^{-j\frac{2\pi(s_0-s_1)}{I}}$.

Also gilt $\arg\left(f(s_0)\right) = -\frac{2\pi(s_0-s_1)}{I} = \frac{2\pi s_1}{I} - N\varphi_0$

Dem Empfänger stehen nur die Abtastwerte $\psi_{k,m}$ zur Verfügung. Anstelle des Integrals aus Gl. (6) tritt näherungsweise die Summe

$$f(s_0) \approx j\frac{1}{M}\sum_{m=0}^{M-1}\sum_{k=0}^{I-1}\psi_{k,m}e^{-j\frac{2\pi(m+kM)}{IM}}$$

Die Näherung ist exakt, wenn $\rho(s)$ bandbegrenzt ist und das Abtasttheorem für die normierte Abtastrate $M$ erfüllt. Zu beachten ist, dass bereits oben die Bandbegrenzung von $r(s)$ gefordert war. Aufgrund der Nichtlinearität des Operators $\arg()$ folgt allein daraus noch nicht die Bandbegrenzung von $\rho(s)$. Indem man $M$ hinreichend groß wählt, kann man sie aber in der Praxis mindestens näherungsweise erreichen.

Ein Sendesignal wird bevorzugt wie folgt erzeugt:

Eine Bake besitzt $IN$ Sendekanäle. Der durch das Indexpaar $[i,n]$ gekennzeichnete Kanal hat die Hauptabstrahlrichtung $\varphi[i,n] = \frac{2\pi(i+nI)}{NI}$. Seine richtungsabhängige Abstrahlcharakteristik wird durch die Funktion $a(\varphi-\varphi[i,n])$ beschrieben.

Für jeden durch das Indexpaar $k,m$ gekennzeichneten Zeitabschnitt erzeugt der Sender ein komplexes Signal $x_{k,m}(t)$. Die Signale verschiedener Zeitabschnitte dürfen sich nicht überlappen. Das Signal wird von allen Kanälen simultan abgestrahlt, wobei es zuvor mit dem jeweiligen Faktor $h_{k,m}[i,n]$ verstärkt wurde

Das durch additive Überlagerung der Kanäle entstehende winkelabhängige Sendesignal hat die Gestalt

$$x(t,\varphi) = \sum_{n=0}^{N-1}\sum_{i=0}^{I-1}a\left(\varphi - \frac{2\pi(i+nI)}{NI}\right)\sum_{m=0}^{M-1}\sum_{k=0}^{I-1}x_{k,m}(t)h_{k,m}[i,n]$$

Seine einzelnen Komponenten sollen folgende Eigenschaften besitzen:

$a(\varphi)$ ist eine reelle, gerade, $2\pi$-periodische Funktion. Sie ist bandbegrenzt und erfüllt das Abtasttheorem für die Rate $\frac{NI}{2\pi}$.

Es gibt eine komplexe Funktion $h(s)$ mit folgenden Eigenschaften: Der Realteil von $h(s-s_1)e^{j\gamma 1}$ mit geeignet

festgelegten Konstanten $s_1$ und $\gamma_1$ ist eine gerade, ihr Imaginärteil eine ungerade Funktion. Sie ist periodisch mit der Periode $I$ und erfüllt das Abtasttheorem für die normierte Rate 1. Die Verstärkungsfaktoren $h_{k,m}[i,n]$ lassen sich aus der Funktion $h(s)$ folgendermaßen erzeugen:

$$h_{k,m}\big[i,n\big]=h\Big(k-i+\tfrac{m}{M}\Big)$$

Insbesondere sind die Verstärkungsfaktoren unabhängig von $n$.

Ein Empfangssignal wird bevorzugt wie folgt verarbeitet:

Das Empfangssignal werde durch die Gleichung

$$y\big(t\big)=\sum_{m=0}^{M-1}\sum_{k=0}^{I-1}x_{k,m}\big(t\big)v_{k,m}\big(\varphi_0\big)$$

beschrieben.

In einem ersten Schritt bestimmt der Empfänger die Koeffizienten $v_{k,m}$. Da sich die Signalabschnitte $x_{k,m}(t)$ zeitlich nicht überlappen, ist das recht einfach möglich, denn in jedem Zeitabschnitt degeneriert die Doppelsumme zu einem einzelnen Summanden. Die $x_{k,m}(t)$ seien dem Empfänger entweder a priori bekannt oder es handelt sich um digital modulierte Signale, deren Modulation so gewählt ist, dass der Empfänger den Informationsgehalt aus den Signalabschnitten ohne Kenntnis der $v_{k,m}$ wiedergewinnen kann, woraufhin er in der Lage ist, die $x_{k,m}(t)$ zu rekonstruieren.

Im zweiten Schritt bestimmt der Empfänger aus den komplexen Phasen $\psi_{k,m} = arg(v_{k,m})$ die Größe

$$f=j\frac{1}{M}\sum_{m=0}^{M-1}\sum_{k=0}^{I-1}\psi_{k,m}e^{-j\frac{2\pi(m+kM)}{IM}}$$

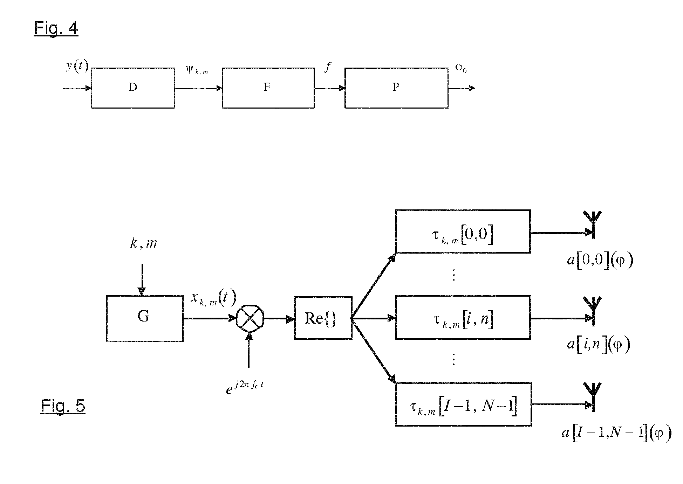

und schätzt schließlich den Winkel zu $\quad \varphi_0=\frac{2\pi s_1}{I}-\frac{1}{N}\arg\big(f\big)$. Eine Empfängeranordnung kann dementsprechend wie in der Figur 4 dargestellt aussehen.

Bei einem im Folgenden näher erläuterten Spezialfall wird das Sendesignal mittels kanalspezifischer Verzögerungen erzeugt.

Die Implementierung der Bake lässt sich vereinfachen, wenn die Funktion $h(t)$ eine bestimmte Gestalt hat und die Trägerfrequenz $fc$ geeignet gewählt wird. $h(t)$ sei so gewählt, dass für alle Verstärkungsfaktoren gilt

$$h_{k,m}\big[i,n\big]=e^{-j2\pi f_c\tau_{k,m}[i,n]},$$

d.h. der Betrag für alle $k,m,i,n$ sei konstant. Der Verstärkungsfaktor korrespondiert unter diesen Randbedingungen eindeutig mit einer Verzögerungszeit $\tau_{k,m}[i,n]$.

Wenn $f_c$ hinreichend groß gegenüber der Bandbreite von $x(t)$ ist, gilt für alle im System auftretenden Verzögerungszeiten $x(t-\tau)\approx x(t)$. Dann lässt sich die Struktur des Senders erheblich vereinfachen, indem das reelle Signal an einer Stelle zentral erzeugt und den einzelnen Sendekanälen lediglich mit unterschiedlicher Zeitverzögerung zugeführt wird. Eine hierzu passende vereinfachte Senderanordnung ist in der Figur 5 dargestellt.

Auch die Verarbeitung im Empfänger vereinfacht sich, da anstelle komplexer Faktoren $v_{k,m}$ lediglich Zeitverzögerungen $\upsilon_{k,m}$ gemessen werden, die bis auf einen von der Trägerfrequenz abhängigen Proportionaliätsfaktor mit den $\psi_{k,m}$ übereinstimmen.

Im Folgenden wird ein Realisierungsbeispiel erläutert:

Betrachtet werde ein System mit folgenden Parametern

| | |
|---|---|
| $I$ | 8 |
| $N$ | 2 |
| $M$ | 1 |

Das Bakensignal umfasst also 16 Kanäle und 8 Zeitabschnitte.

Für die komplexen Verstärkungsfaktoren gelte $h_{k,m}[i,n] = e^{-j\delta_k[i]}$, d.h. es liegt der oben beschriebene Spezialfall vor. Die Verstärkungsfaktoren sind, wie gefordert, unabhängig von $n$. Aufgrund der Festlegung $M=1$ kann der Index $m$ zur besseren Übersichtlichkeit weggelassen werden.

Die $\delta_k[i]$ seien gemäß nachfolgender Tabelle festgelegt:

| $\delta_k[i]$    $i$ | 0 | 1 | 2 | 3 | 4 | 5 | 6 | 7 |
|---|---|---|---|---|---|---|---|---|
| $k$ | | | | | | | | |
| 0 | $-\pi/4$ | $-3\pi/4$ | $-3\pi/4$ | $-3\pi/4$ | $-\pi/4$ | $\pi/4$ | $3\pi/4$ | $3\pi/4$ |
| 1 | $3\pi/4$ | $\pi/4$ | $-\pi/4$ | $-3\pi/4$ | $-3\pi/4$ | $\pi/4$ | $3\pi/4$ | $3\pi/4$ |
| 2 | $3\pi/4$ | $3\pi/4$ | $\pi/4$ | $-\pi/4$ | $-3\pi/4$ | $-3\pi/4$ | $-\pi/4$ | $\pi/4$ |
| 3 | $\pi/4$ | $3\pi/4$ | $3\pi/4$ | $\pi/4$ | $-\pi/4$ | $-3\pi/4$ | $-3\pi/4$ | $-\pi/4$ |
| 4 | $-\pi/4$ | $\pi/4$ | $3\pi/4$ | $3\pi/4$ | $\pi/4$ | $-\pi/4$ | $-3\pi/4$ | $-3\pi/4$ |
| 5 | $-3\pi/4$ | $-\pi/4$ | $\pi/4$ | $3\pi/4$ | $3\pi/4$ | $\pi/4$ | $-\pi/4$ | $-3\pi/4$ |
| 6 | $-3\pi/4$ | $-3\pi/4$ | $-\pi/4$ | $\pi/4$ | $\pi/4$ | $3\pi/4$ | $-\pi/4$ | $-\pi/4$ |
| 7 | $-\pi/4$ | $-3\pi/4$ | $-3\pi/4$ | $-3\pi/4$ | $-3\pi/4$ | $3\pi/4$ | $3\pi/4$ | $\pi/4$ |

Die Funktion $h(s)$ erhält man durch periodische, bandbegrenzte Interpolation

$$h(s) = \tfrac{1}{I} \sum_{k=0}^{I-1} e^{-j\delta_k[0]} \sin\left(\pi\left(s-k\right)\right) \cot\left(\tfrac{\pi}{I}\left(s-k\right)\right)$$

Man überzeugt sich leicht, dass $h(s)$ bei Wahl von $s_1 = 1/2$ und $\gamma_1 = 0$ die geforderten Eigenschaften erfüllt:

Der Realteil von $h(s-s_1)e^{j\gamma_1}$ ist eine gerade Funktion.

Der Imaginärteil von $h(s-s_1)e^{j\gamma_1}$ ist eine ungerade Funktion.

Aufgrund der Interpolationsvorschrift ist $h(s)$ periodisch mit Periode $I$. Aufgrund der Interpolationsvorschrift ist bandbegrenzt und erfüllt das Abtasttheorem bezüglich der normierten Abtastrate 1.

Also ist dieses Signal zur Durchführung des Verfahrens geeignet.

Es besteht die Möglichkeit zur Erweiterung auf eine Modulation nichtsinusförmiger Träger

In der Herleitung wurde davon ausgegangen, dass das Sendesignal durch Modulation eines sinusförmigen Trägers entsteht. Dieser Ansatz ist in vielen Fällen sinnvoll und z.B. bei Funkübertragung aufgrund der notwendigerweise bandbegrenzten Funkkanäle typischerweise anzutreffen.

Bei anderen Übertragungsmedien, z.B. Licht, ist die Trägerfrequenz dagegen oftmals nicht sinusförmig sondern z.B. rechteck- oder dreieckförmig. Das stellt aber keine Einschränkung des beschriebenen Verfahrens dar, solange die Trägerfrequenz $f_c$ groß gegen die doppelseitige Bandbreite der Basisbandsignale $x[i,n](t)$ ist.

Man kann sich das Trägersignal zusammengesetzt denken als additive Überlagerung spektraler Komponenten, d.h. sinusförmiger Signale deren Frequenzen ganzzahlige Vielfache von $f_c$ sind.

Durch ein Bandpassfilter der Mittenfrequenz $f_c$ am Empfängereingang, welches so dimensioniert ist, dass es die modulierte Grundschwingung ungehindert passieren lässt, die harmonischen Vielfachen hingegen sperrt, wird dem Demodulator ein Signal in Form eines modulierten Sinusträgers präsentiert, weshalb das beschriebene Verfahren ohne Änderung anwendbar ist.

Im Folgenden wird ein optisches Ortungssystem beschrieben, welches von den vorstehenden Verfahren Gebrauch macht:

Im Folgenden wird ein System beschrieben, das aus einer Anzahl ortsfester Infrarotsender, sog. IR-Baken, und mindestens einem IR-Empfänger besteht. Aus den von den IR-Baken empfangenen Signalen schätzt der Empfänger seinen eigenen Standort.

Die Ortsbestimmung erfolgt nach dem Verfahren "Angle of Arrival" AoA, was auf einer Messung der Einfallswinkel der Bakensignale und anschließender Triangulation beruht. Sein Vorteil gegenüber laufzeitmessenden Verfahren liegt darin, dass es weitaus geringere Anforderungen an die Synchronität der Baken untereinander hat, weshalb es für eine microcontrollerbasierte Implementierung geeignet ist.

Ziel ist, empfängerseitig aus Kostengründen mit einem einzelnen, omnidirektionalen IR-Detektor zu arbeiten. Der Einfallswinkel des Bakensignals lässt sich unter dieser Randbedingung nur dadurch ermitteln, dass das Bakensignal richtungsspezifisch unterschiedlich konditioniert wird. Weiterhin muss das Bakensignal moduliert werden, um vorhandene IR-Störer, z.B. Leuchtstofflampen, wirksam zu unterdrücken. Die Modulation ist bevorzugt so auszulegen, dass handelsübliche, kostengünstige IR-Detektoren verwendet werden können, z.B. solche, wie sie in Fernbedienungen eingesetzt werden.

Zur Ortung ist es notwendig, dass an einem Ort Signale verschiedener Baken empfangen werden. Diese müssen sich das Übertragungsmedium ohne Kollision teilen. Hierzu wird ein Zeitmultiplexverfahren eingesetzt, bei dem jeder Bake ein fester Zeitslot zugewiesen ist. Die Baken müssen untereinander hinreichend synchronisiert sein, damit die Ungenauigkeiten der verschiedenen Zeitbasen nicht zu einer Störung benachbarter Zeitslots führen. Diese Synchronitätsforderung ist aber erheblich moderater als die zeitlichen Anforderungen bei laufzeitbasierten Ortungsverfahren.

Neben den Einfallswinkeln benötigt der IR-Empfänger für die Triangulation auch die genauen Positionen der IR-Baken. Das System ist vom Ansatz her 2D, also reichen die x- und $\gamma$-Koordinaten zur Positionsbestimmung. Da die Baken ohnehin modulierte Signale aussenden, können sie auch Information über ihre Position abstrahlen. Es ist also nicht notwendig, dem IR-Empfänger vorab irgendwelche Kontext-Information zu geben.

In dieser Spezifikation wird folgendes festgelegt:

Ein Modulationsverfahren für die IR-Baken, das eine Bestimmung des Einfallswinkels aus dem Empfangssignal erlaubt Symbolkodierung, Slot- und Rahmenstruktur des Zeitmultiplexverfahrens, Aufbau der Telegramme, mittels derer die IR-Baken Information versenden

Daneben werden Methoden vorgestellt zur Synchronisation des IR-Empfängers und der IR-Baken untereinander zur Bestimmung des Einfallswinkels aus dem Empfangssignal zur Bestimmung des eigenen Standorts aufgrund der gemessenen Einfallswinkel.

Hierfür sind im Grundsatz auch abweichende Implementierungen möglich.

Der Systemtakt kann beispielsweise wie folgt festgelegt werden:

Der Takt sollte sich aus gängigen CPU-Frequenzen durch Teilung exakt ableiten lassen. Der Hersteller "Vishay" hat IR-Empfänger für 36, 38, 40, 56 kHz Bandpassfrequenz, die auf +/- 5% genau getroffen werden sollte.

| Basis [MHz] | Teiler | Takt [kHz] | IR-Bandpass [kHz] | Abweichung |
|---|---|---|---|---|
| 1,000 | 24 | 41,6667 | 40 | +4,2% |
| 1,000 | 18 | 55,5556 | 56 | -0,8% |
| 1,200 1,500 | 32 40 | 37,5 | 38 | -1,3% |

Wir wählen die Kombination 1 MHz / 18, da sie die höchste Übertragungsrate bei gleichzeitig geringster Abweichung von der Bandpassfrequenz hat. Damit ergibt sich ein Taktzyklus von 18 $\mu$s.

Die Modulation geschieht folgendermaßen:

Damit handelsübliche IR-Empfänger eingesetzt werden können, wird mit folgendem Signal gearbeitet.

"1"-Signal (Aktiv): 10 aufeinander folgende IR-Pulse der Dauer 9 $\mu$s, dazwischen jeweils 9 $\mu$s Pause.

Notation ⎍ 180 ⎍ = ⊓⊓⊓⊓⊓⊓⊓⊓⊓⊓ ← 10x18 µs →

"1 "-Signale folgen entweder direkt aufeinander, oder sind durch eine Pause von mindestens 180 $\mu$s Dauer getrennt.

Maximal 3 "1"-Signale dürfen ohne Pause aufeinander folgen aufgrund der im Vishay IR-Empfänger implementierten Störunterdrückung.

Das Prinzip der Winkelmessung wird im Folgenden beschrieben.

Die IR-Bake hat 16 LEDs, die den kompletten Winkelbereich in Sektoren abdecken. Eine Triangulation basiert im Grundsatz darauf, den Schnittpunkt der jeweils durch Bakenposition und Abstrahlwinkel definierten Geraden zu finden. Dabei muss der Winkel nur auf 180° eindeutig bestimmt werden, da $\alpha$ und $\alpha+180°$ dieselbe Gerade beschreiben. Indem jede LED mit der 180° gegenüberliegenden zu einer Gruppe verschaltet wird, kann man sich also auf insgesamt 8 LED-Kanäle beschränken.

Für eine genaue Ortung reicht es allerdings nicht aus, den Winkel-Sektor zu bestimmen, der einer Winkelauflösung von lediglich 22,5° entspricht. Wenn man die LEDs so auswählt, dass sich ihre Sektoren überlappen (halbseitiger Öffnungswinkel ca. 25-30°), kann der Empfänger aus dem Überlagerungsverhältnis der Signale den Einfallswinkel erheblich genauer bestimmen.

Konkret besteht der Ansatz darin, zwischen zwei benachbarten LED-Kanälen eine Signalverzögerung zu wählen, die bezogen auf die Modulationsperiode von 18μs gerade einer Phasenverschiebung von $\pi/2$ entspricht, d.h. 4,5μs. Dann sind die Signale bezogen auf die Modulationsfrequenz orthogonal. Ein Empfänger, der sich vom Winkel her zwischen den LED-Kanälen befindet, empfängt dann eine Linearkombination beider Signale deren resultierende Signalverzögerung bei idealer LED-Abstrahlcharakteristik zum Einfallswinkel proportional ist.

Bei einer in diesem Zusammenhang interessierenden Pulsejitter-Modulation arbeitet man mit dem Prinzip, von einem LED-Kanal zum nächsten eine Signalverzögerung von 4,5μs zu verwenden, stößt dann allerdings auf ein Problem. Auf den achten Kanal (Verzögerung gegenüber dem ersten Kanal 31,5μs) folgt wieder der erste. Um diesen Bruch des Schemas zu vermeiden werden die LED-Kanäle so gegeneinander verzögert, dass das Delay von Kanal zu Kanal bis zu einem Wendepunkt zunimmt (abnimmt) und dann wieder - bis zu einem zweiten Wendepunkt - abnimmt (zunimmt). Trägt man das Delay als Funktion der LED-Kanal Nr. auf, so ergibt sich ein dreiecksförmiger Signalverlauf.

Die Lösung des Sprungstellenproblems erkauft man sich zu Lasten einer Doppeldeutigkeit. Anhand des empfangenen Delays kann bei dem oben dargestellten Verlauf z.B. nicht entschieden werden, ob sich der Empfänger im Sektorbereich der Kanäle 1-2 oder 3-4 befindet. Um die Doppeldeutigkeit aufzulösen, verwendet man abwechselnd verschiedene Delay-Schemen mit unterschiedlichen Doppeldeutigkeitsbereichen.

Folgende Delay-Schemen sind definiert:

| Delay (μs) | LED-Kanal Nr, | | | | | | | |
|---|---|---|---|---|---|---|---|---|
| Schema Nr. | 0 | 1 | 2 | 3 | 4 | 5 | 6 | 7 |
| 0 | 11,25 | 6,75 | 2,25 | 2,25 | 6,75 | 11,25 | 15,75 | 15,75 |
| 1 | 15,75 | 11,25 | 6,75 | 2,25 | 2,25 | 6,75 | 11,25 | 15,75 |
| 2 | 15,75 | 15,75 | 11,25 | 6,75 | 2,25 | 2,25 | 6,75 | 11,25 |
| 3 | 11,25 | 15,75 | 15,75 | 11,25 | 6,75 | 2,25 | 2,25 | 6,75 |
| 4 | 6,75 | 11,25 | 15,75 | 15,75 | 11,25 | 6,75 | 2,25 | 2,25 |

(fortgesetzt)

| Delay (μs) | LED-Kanal Nr, | | | | | | | |
|---|---|---|---|---|---|---|---|---|
| Schema Nr. | 0 | 1 | 2 | 3 | 4 | 5 | 6 | 7 |
| 5 | 2,25 | 6,75 | 11,25 | 15,75 | 15,75 | 11,25 | 6,75 | 2,25 |
| 6 | 2,25 | 2,25 | 6,75 | 11,25 | 15,75 | 15,75 | 11,25 | 6,75 |
| 7 | 6,75 | 2,25 | 2,25 | 6,75 | 11,25 | 15,75 | 15,75 | 11,25 |

Eine Symbolkodierung geschieht zum Beispiel wie folgt:

Die Basis der Übertragung sind Nibble (16-wertige Symbole). Um lange Folgen von "1"-en oder "0"-en zu vermeiden wird ein Nibble als 5 bit kodiert. Der Kode stellt sicher, dass

- im Bitstrom nie mehr als drei aufeinander folgende "1 "-en entstehen

- maximal fünf "0"-en aufeinander folgen

| Symbol | Bitfolge | | Zahl (MSB first) | Encode |
|---|---|---|---|---|
| | Decode | | | |
| 0x6 | 0 0 0 1 1 | 3 | 6 - 3 | 3 +3 |
| 0x7 | 0 0 1 0 0 | 4 | 7 - 3 | 4 +3 |
| 0x8 | 0 0 1 0 1 | 5 | 8 - 3 | 5 +3 |
| 0x9 | 0 0 1 1 0 | 6 | 9 - 3 | 6 +3 |
| 0xa | 0 1 0 0 1 | 9 | a-1 | 9 + 1 |
| 0xb | 0 1 0 1 0 | 10 | b - 1 | 10 + 1 |
| 0xc | 0 1 0 1 1 | 11 | c - 1 | 11 + 1 |
| 0xd | 0 1 1 0 0 | 12 | d-1 | 12 + 1 |
| 0xe | 0 1 1 0 1 | 13 | e - 1 | 13 + 1 |
| 0xf | 0 1 1 1 0 | 14 | f - 1 | 14 + 1 |
| 0x0 | 1 0 0 0 1 | 17 | 0+17 | 17-17 |
| 0x1 | 1 0 0 1 0 | 18 | 1 +17 | 18 - 17 |
| 0x2 | 1 0 0 1 1 | 19 | 2+17 | 19-17 |
| 0x3 | 1 0 1 0 0 | 20 | 3 +17 | 20 - 17 |
| 0x4 | 1 0 1 0 1 | 21 | 4+17 | 21 - 17 |
| 0x5 | 1 0 1 1 0 | 22 | 5+17 | 22 - 17 |

Die Bitfolge wird von links nach rechts übertragen. Die Encode und Decode Vorschriften betrachten die Bitfolge als 5-stellige Binärzahl mit dem höchstwertigen Bit links (MSB first).

Ein Symbol benötigt 900μs (5x180μs).

Damit die Signale der verschiedenen IR-Baken nicht kollidieren, senden diese im Zeitmultiplex. Die Rahmendauer beträgt 200ms. Die einzelne Bake sendet wiederkehrend, in jedem Rahmen im gleichen Zeitslot, also fünfmal pro Sekunde.

Der Zeitrahmen ist in 25 Slots zu jeweils 8000μs unterteilt. Es dürfen also in einem Gebiet maximal 25 IR-Baken zu empfangen sein. In ausreichender räumlicher Distanz können die Zeitslots wieder verwendet werden. Damit lassen sich auch größere Installationen implementieren.

Pro Zeitslot wird jeweils ein Paket gesendet. Es besteht aus 42 bits, dauert also "nominal" 7560μs. Aufgrund der Jittermodulation findet eine "Verschmierung" der Schaltzeitpunkte statt, was zu einer Verlängerung des Pakets um maximal 18μs führt. Es ist ein Guardintervall von 440μs bis zum nächsten Zeitschlitz vorhanden.

Geht man von einem Quarz in kommerzieller Charakteristik mit einer Genauigkeit 10^-4 aus, so beträgt im denkbar schlechtesten Falle, d.h. bei Aufeinandertreffen maximaler und minimaler Frequenz, die Drift zwischen Sender und Empfänger 40μs pro Rahmen. Die Drift zwischen den verschiedenen IR-Baken muss ausgeregelt werden, andernfalls kollidieren benachbarte Zeitschlitze bereits nach kurzer Zeit. Es ist schon allein aus diesem Grund notwendig, dass jede Bake die benachbarten Baken empfängt.

Das Paket besteht aus einer Präambel "1 0" (2 bits) gefolgt von 8 Symbolen (40 bits). Die Präambel wird phasensynchron moduliert, der Rest des Pakets mit überlagerter Pulsjitter-Modulation. Das erste auf die Präambel folgende Symbol verwendet Delay-Schema Nr. 0, für jedes folgende Symbol wird die Nr. des Delay-Schemas inkrementiert

Werden mehrere aufeinanderfolgende "1"-Bits übertragen - aufgrund der Symbolkodierung können maximal drei "1"-Bits aufeinanderfolgen -, so wird für alle diese Bits das Delay-Schema des ersten angewendet.

Die folgende Beschreibung verschiedener Details erfolgt rein beispielhaft. Für die Durchführung der Erfindung gibt es auch andere Ausführungsformen.

Paketaufbau

Der Inhalt eines Pakets besteht aus 8 Symbolen Si, die in der Reihenfolge S0..S7 übertragen werden.

| S0 | | | | |
|----|--|--|--|--|
| S1 | | | | |
| S2 | | | | |
| S3 | | | | |
| S4 | | | | |
| S5 | | | | |
| S6 | CHK b7 | | | b4 |
| S7 | CHK b3 | | | b0 |

Die Checksumme CHK berechnet sich nach folgendem Algorithmus

```
CHK = 0
for (symbol=S0 to S5)
{
    for (bit = symbol[b3] to symbol[b0])
    {
        CHK=CHK+CHK+bit;
        if (CHK>255) CHK = CHK xor 305;
    }
}
CHK = CHK xor IDENT
IDENT bezeichnet die 8-bit Kennung des Senders.
```

Innerhalb der Sichtweite einer Bake darf dieselbe IDENT nicht doppelt vorkommen. Außerhalb der Sichtweite kann dieselbe IDENT aber durchaus wiederholt verwendet werden. Der Empfänger speichert Information zu den Baken in seiner Sichtweite grundsätzlich nur temporär und gibt sie wieder frei, sobald er die entsprechende Bake nicht mehr sieht.

Pakettyp X_POS

| S0 | TYPE: X_POS_TYPE 1 | 1 | X_POS b21 (sign) | b20 |
|----|----|----|----|----|
| S1 | X_POS b19 | | | b16 |
| S2 | X_POS b15 | | | b12 |
| S3 | X_POS b11 | | | b8 |
| S4 | X_POS b7 | | | b4 |

(fortgesetzt)

| S0 | TYPE: X_POS_TYPE | | X_POS | |
|----|----|----|----|----|
| | 1 | 1 | b21 (sign) | b20 |
| S5 | X_POS | | | |
| | b3 | | | b0 |
| S6 | CHK | | | |
| | b7 | | | b4 |
| S7 | CHK | | | |
| | b3 | | | b0 |

X_POS bezeichnet die X-Koordinate der Position des Senders. Einheit: mm

Pakettyp Y_POS

| S0 | TYPE: Y_POS_TYPE | | Y_POS | |
|----|----|----|----|----|
| | 1 | 0 | b21 (sign) | b20 |
| S1 | Y_POS | | | |
| | b19 | | | b16 |
| S2 | Y_POS | | | |
| | b15 | | | b12 |
| S3 | Y_POS | | | |
| | b11 | | | b8 |
| S4 | Y_POS | | | |
| | b7 | | | b4 |
| S5 | Y_POS | | | |
| | b3 | | | b0 |
| S6 | CHK | | | |
| | b7 | | | b4 |
| S7 | CHK | | | |
| | b3 | | | b0 |

Y_POS bezeichnet die Y-Koordinate der Position des Senders. Einheit: mm

Pakettyp SYNC

| S0 | TYPE: SYNC_TYPE | | | |
|----|----|----|----|----|
| | 0 | 1 | 1 | 1 |
| S1 | IDENT | | | |
| | b7 | | | b4 |
| S2 | IDENT | | | |
| | b3 | | | b0 |
| S3 | VERS_MAJOR | | | |
| | b3 | | | b0 |
| S4 | VERS_MINOR | | | SLOT |
| | b3 | | b0 | b4 |
| S5 | SLOT | | | |
| | b3 | | | b0 |
| S6 | CHK | | | |

(fortgesetzt)

| S0 | TYPE: SYNC_TYPE | | | |
|---|---|---|---|---|
| | 0 | 1 | 1 | 1 |
| | b7 | | | b4 |
| S7 | CHK | | | |
| | b3 | | | b0 |

IDENT bezeichnet die Kennung des Senders.

VERS_MAJOR bezeichnet die Versionsnummer des Protokolls. Aktuelle Version ist 0

VERS_MINOR bezeichnet die Dezimale der Versionsnummer des Protokolls. Aktuelle Version ist 0

SLOT bezeichnet die Slotnummer dieses Pakets. Zulässige Werte 0..24

Pakettyp IDENT

| S0 | TYPE: IDENT_TYPE | | | |
|---|---|---|---|---|
| | 0 | 1 | 1 | 0 |
| S1 | IDENT | | | |
| | b7 | | | b4 |
| S2 | IDENT | | | |
| | b3 | | | b0 |
| S3 | ANGLE_OFFSET | | | |
| | b11 | | | b8 |
| S4 | ANGLE_OFFSET - | | | |
| | b7 | | | b4 |
| S5 | ANGLE_OFFSET | | | |
| | b3 | | | b0 |
| S6 | CHK | | | |
| | b7 | | | b4 |
| S7 | CHK | | | |
| | b3 | | | b0 |

IDENT bezeichnet die Kennung des Senders.

ANGLE_OFFSET bezeichnet den Winkeloffset, den der Empfänger zu dem aus Phasenjitter-Modulation ermittelten Winkel addieren muss, um den tatsächlichen Empfangswinkel zu berechnen.

Wertebereich 0x000 (entspricht 0°) bis 0xFFF. 0x1000 entspricht 180°

Pakettyp SLOT_TABLE

| S0 | TYPE: SLOT_T ABLE_TYPE | | | |
|---|---|---|---|---|
| | 0 | 1 | 0 | 1 |
| S1 | SLOT_TABLE | | | |
| | b11/b23 | | | b8/b20 |
| S2 | SLOT_TABLE | | | |
| | b7/b19 | | | b4/b16 |
| S3 | SLOT_TABLE | | | |
| | b3/b15 | | | b0/b12 |
| S4 | UPPER_HALF | SLOT_TABLE | RFA | SLOT |
| | 0/1 | 0/b24 | 0 | b4 |
| S5 | SLOT | | | |

(fortgesetzt)

| S0 | TYPE: SLOT_T ABLE_TYPE | | | |
|---|---|---|---|---|
| | b3 | | | b0 |
| S6 | CHK | | | |
| | b7 | | | b4 |
| S7 | CHK | | | |
| | b3 | | | b0 |

SLOT_TABLE ist ein Vektor der Länge 25 bit, korrespondierend zu den 25 Zeitschlitzen. Wenn ein Bit gesetzt ist, so sieht der Sender auf diesem Zeitschlitz ein Signal.

Die SLOT_TABLE ist zu groß für eine Message. Deshalb wird sie aufgeteilt. Wenn das Flag UPPER_HALF gesetzt ist, werden die bits b12 bis b24 übertragen, ansonsten bits b0 bis b11.

SLOT bezeichnet die Slotnummer dieses Pakets. Zulässige Werte 0..24

Pakettyp Generic 16 Bit / Subtype Z_POS

| S0 | TYPE: GENERIC_16BIT_TYPE | | | |
|---|---|---|---|---|
| | 0 | 1 | 0 | 0 |
| S1 | SUBTYPE: Z_POS | | | |
| | 0 | 0 | 0 | 0 |
| S2 | Z_POS | | | |
| | b15 | | | b12 |
| S3 | Z_POS | | | |
| | b11 | | | b8 |
| S4 | Z_POS | | | |
| | b7 | | | b4 |
| S5 | Z_POS | | | |
| | b3 | | | b0 |
| S6 | CHK | | | |
| | b7 | | | b4 |
| S7 | CHK | | | |
| | b3 | | | b0 |

Z_POS bezeichnet die z-Koordinate (Höhe) der Senderkoordinaten in Systemkoordinaten. Es handelt sich um eine vorzeichenbehaftete Zahl. Die Einheit ist mm.

Pakettyp ANGLE_OFFSET_NOTIFY

| S0 | TYPE: ANGLE_OFFSET_NOTIFY | | | |
|---|---|---|---|---|
| | 0 | 0 | 0 | 0 |
| S1 | RECV_IDENT | | | |
| | b7 | | | b4 |
| S2 | RECV_IDENT | | | |
| | b3 | | | b0 |
| S3 | ANGLE_OFFSET | | | |
| | b11 | | | b8 |
| S4 | ANGLE_OFFSET | | | |
| | b7 | | | b4 |
| S5 | ANGLE_OFFSET | | | |

(fortgesetzt)

| S0 | TYPE: ANGLE_OFFSET_NOTIFY | | | |
|----|------|------|------|------|
| | 0 | 0 | 0 | 0 |
| | b3 | | | b0 |
| S6 | CHK | | | |
| | b7 | | | b4 |
| S7 | CHK | | | |
| | b3 | | | b0 |

RECV_IDENT ist die Kennung des Empfängers für diese Nachricht.

ANGLE_OFFSET bezeichnet den Winkeloffset, den der Sender zu dem aus Phasenjitter-Modulation ermittelten Winkel der Bake RECV_IDENT addieren musste, damit der so berechnete Empfangswinkel mit den Ortskoordinaten der Bake konsistent ist.

Wertebereich 0x000 (entspricht 0°) bis 0xFFF. 0x1000 entspricht 180°

Eine Ortung aufgrund des Angle of Arrival (AoA) geschieht wie folgt:

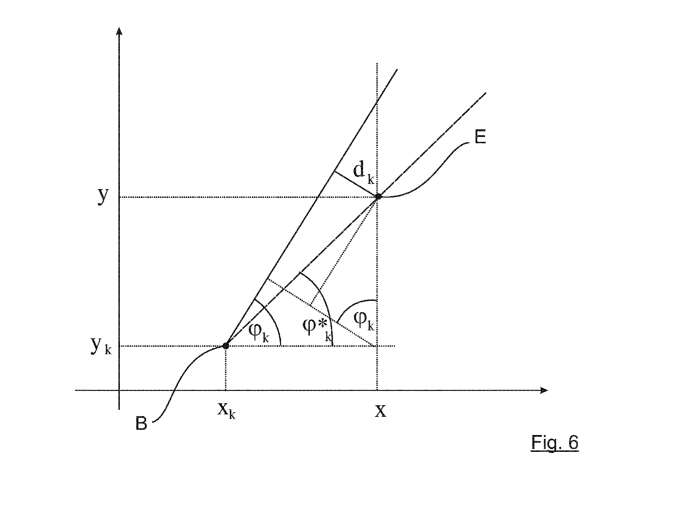

Die Bake B befinde sich am Ort $(x_k|y_k)$ und werde vom Empfänger am Ort $(x|y)$ unter dem Winkel $\varphi_k$ empfangen. In einer "idealen" Welt ohne Messfehler und Störungen würde sich der Empfänger exakt auf dem unter dem Winkel $\varphi_k$ von der Bake ausgehenden Strahl befinden. In der realen Welt kommt es zu bei der Winkelmessung zu Abweichungen. Der unter dem gemessenen Winkel $\varphi_k$ von der Bake B ausgehende Strahl läuft im Abstand $d_k$ am Empfänger vorbei. Hierzu wird auf Fig. 6 verwiesen.

Eine LSE-Ortung geschieht wie folgt:

Aus dem geometrischen Zusammenhang bestimmt man

$$d_k = \left( x - x_k \right) \sin \varphi_k - \left( y - y_k \right) \cos \varphi_k$$

Der Empfänger schätzt seine unbekannte Position anhand der Empfangssignale von mehreren Baken als Minimum der Zielfunktion $\left( \hat{x} | \hat{y} \right) = \min_{x,y} G \left( x, y \right)$ mit

$$G \left( x, y \right) = \sum_k \lambda_k d_k^2 = \sum_k \lambda_k \left[ \left( x - x_k \right) \sin \varphi_k - \left( y - y_k \right) \cos \varphi_k \right]^2$$

In der Zielfunktion treten Gewichtskoeffizienten $\lambda_k$ auf, durch die sich verschiedene Schätzstrategien realisieren lassen. Im einfachsten Fall, $\lambda_k = 1$ für alle k, ergibt sich der sog. LSE-Schätzer, das Minimum der summierten Fehlerquadrate.

Nullsetzen des Gradienten führt auf ein lineares Gleichungssystem, das sich analytisch auflösen lässt. Man erhält das Ergebnis $\hat{x} = \dfrac{b_1 a_{22} - b_2 a_{12}}{a_{11} a_{22} - a_{12}^2}$ ; $\hat{y} = \dfrac{b_1 a_{12} - b_2 a_{11}}{a_{11} a_{22} - a_{12}^2}$ mit den zur Abkürzung eingeführten Symbolen

$$a_{11} = \sum_k \lambda_k \sin^2 \varphi_k$$

$$a_{12} = \sum_k \lambda_k \sin \varphi_k \cos \varphi_k$$

$$a_{22} = \sum_k \lambda_k \cos^2 \varphi_k$$

$$b_1 = \sum_k \lambda_k \left( x_k \sin \varphi_k - y_k \cos \varphi_k \right) \sin \varphi_k$$

$$b_2 = \sum_k \lambda_k \left( x_k \sin \varphi_k - y_k \cos \varphi_k \right) \cos \varphi_k$$

Neben dem vorbeschriebenen LSE-Schätzer sei noch eine Variante betrachtet, die darauf abzielt, die Summe der quadratischen Winkelfehler $\delta_k$ zu minimieren also ("Least Square Angle", LSA). Man kann dies also als LSA-Schätzer bezeichnen. Für kleine Winkelfehler gilt in guter Näherung

$$\delta_k = \frac{d_k}{\sqrt{\left( x - x_k \right)^2 + \left( y - y_k \right)^2}}$$

Durch die Wahl $\lambda_k = \dfrac{1}{\left( x - x_k \right)^2 + \left( y - y_k \right)^2}$ erhält man genau dieses Gütemaß.

Eine Alternative stellt die Simplexmethode dar.
Wenn die maximale Winkelabweichung bekannt ist, erzeugt jede Bake einen Sektor. Die Schnittmenge aller Sektoren ist eine konvexe Fläche. Der Standort muss zu dieser Fläche gehören. Der Flächenmittelpunkt ist ein geeigneter Schätzwert.
Ein weiterer Ansatz ist die iterative Projektion:
Wir wählen einen beliebigen Startpunkt (x,y) und projizieren ihn auf die im Winkel $\varphi_k$ durch den Bakenstandort $(x_k,y_k)$ verlaufende Gerade. Das führt zu dem neuen Punkt

$$d_k = \left( x - x_k \right) \sin \varphi_k - \left( y - y_k \right) \cos \varphi_k$$

$$x_{neu} = x - d_k \sin \varphi_k$$

$$y_{neu} = y + d_k \cos \varphi_k$$

Wenn man wiederholt über alle Baken iteriert, konvergiert der Punkt gegen den Schätzwert der Position.
Die Synchronisation erfolgt im Prinzip nach einem Relaxationsverfahren. D.h. jede Baken synchronisiert sich auf alle in Sichtweite befindlichen Nachbarn. Im Vergleich zu Spanning-Tree Verfahren hat dieser Ansatz ein paar Vorteile:
Alle Baken sind gleichberechtigt, es gibt keinen Synchronisationsmaster. Damit entfällt der Administrations- und Signalisierungsaufwand, einen Master festzulegen und seine Identität im gesamten Netz mitzuteilen.
Das Verfahren ist dezentral und beliebig skalierbar.
Das Verfahren ist sehr robust, wenn einzelne Baken ausfallen oder neu ins Netzwerk kommen.
Es handelt sich beim Relaxationsverfahren um einen verteilten Regelalgorithmus. Die Gesamtstabilität des Regelkreises ist nur dann sichergestellt, wenn die einzelnen Regelungen aufeinander abgestimmt sind.
Die Synchronisation geschieht auf zwei Ebenen. Ziel der Slotsynchronisation ist, dass alle Baken den gleichen Startzeitpunkt für den 8ms langen Zeitschlitz einhalten. Die Rahmensynchronisation sorgt dann dafür, dass auch die Startzeitpunkte der 200ms langen Rahmen gleichzeitig erfolgen.
Auch der reine IR- Empfänger benötigt eine Synchronisation, da andernfalls sein lokaler Slottakt vom Bakennetz abweichen wird und er dann die empfangenen Messages möglicherweise eine falsche Bake zuordnet.

Eine Schätzung des Winkel-Offsets geschieht wie folgt:

Jede Bake möge ihre eigene Position (x,y) kennen. Sie empfängt eine Nachbarbake an der Position $(x_k,y_k)$ mit signalisiertem Winkel $\varphi_k$. Nun berechnet diese den Winkel $\psi$k durch Lösen der Gleichung $0=(x-x_k)\sin\psi_k -(y-y_k)\cos\psi_k$ und daraus den Winkel-Offset $\varepsilon_k=\psi_k -\varphi_k$. Diesen signalisiert die Bake weiderum der Nachbarbake.

Nachfolgend werden Ausführungsbeispiele der Erfindung anhand der beiliegenden Zeichnungen beschrieben.

Darin zeigen:

Fig. 1 eine Grundanordnung des Systems zur Bestimmung des Richtungswinkels;

Fig. 2 ein erstes Ausführungsbeispiel der erfindungsgemäßen Sendevorrichtung mit I = 8 und N = 2;

Fig. 3 ein Ausführungsbeispiel zur Erzeugung eines Sendesignals;

Fig. 4 ein Ausführungsbeispiel einer Empfängeranordnung;

Fig. 5 ein vereinfachtes Ausführungsbeispiel einer Senderanordnung und

Fig. 6 ein Beispiel einer Ortung aufgrund des Angle of Arrival (AoA).

In **Fig. 1** ist eine Grundanordnung des Systems zur Bestimmung des Richtungswinkels $\varphi_0$ dargestellt.

Ein Sender S strahlt ein richtungsabhängig moduliertes Signal $x(t,\varphi)$ aus. Ein Empfänger E empfängt dieses Signal, nachdem es ein Übertragungsmedium U durchlaufen hat, und bestimmt aus diesem Signal $y(t,\varphi_0)$ seinen eigenen Richtungswinkel $\varphi_0$ relativ zum Sender S.

Die Anordnung wird als ein zweidimensionales Problem modelliert. Sie lässt sich auf ein dreidimensionales Problem erweitern, indem man eine dritte Koordinatenachse senkrecht zur Zeichnungsfläche einführt. $\varphi_0$ ist dann als Winkel zwischen zwei auf der Zeichnungsfläche senkrecht stehenden Ebenen zu verstehen.

Der Sender S strahlt mit Hilfe von einzelnen Einzelsendevorrichtungen V, beispielsweise einzelne LED's, welche im Infrarotbereich senden, Informationssignale ab.

In **Fig. 2** ist ein erstes Ausführungsbeispiel der erfindungsgemäßen Sendevorrichtung mit I = 8 und N = 2 dargestellt.

Hierbei wird von einem Signalgenerator G ein Signal erzeugt. Dieses Signal wird an unterschiedliche Einzelsendevorrichtungen V geleitet, wobei es vorher durch eine individuelle Konditionierung W bearbeitet wird. Im Anschluss an die individuelle Konditionierung erfolgt die Abstrahlung des Signals durch die einzelnen Einzelsendevorrichtungen V [i,n], wobei die Abstrahlung in unterschiedliche Richtungen, jedoch radial von einem gemeinsamen Punkt erfolgt.

In diesem Ausführungsbeispiel sind die einzelnen Einzelsendevorrichtungen V [i,n] in einem Kreis um einen zentralen Punkt angeordnet und senden insgesamt 360° in den Raum. Hierbei sind die Signale der einzelnen Abschnitte unterschiedlich ausgebildet, wobei die Signale unterschiedlich konditioniert werden.

**Fig. 3** zeigt ein Ausführungsbeispiel zur Erzeugung eines Sendesignals.

In **Fig. 4** ist ein Ausführungsbeispiel einer Empfängeranordnung dargestellt.

**Fig. 5** zeigt ein vereinfachtes Ausführungsbeispiel einer Senderanordnung.

In **Fig. 6** ist ein Beispiel einer Ortung aufgrund des Angle of Arrival (AoA) dargestellt.

Die Bake B befinde sich am Ort $(x_k|y_k)$ und wird vom Empfänger am Ort $(x|y)$ unter dem Winkel $\varphi_k$ empfangen. In einer "idealen" Welt ohne Messfehler und Störungen würde sich der Empfänger exakt auf dem unter dem Winkel $\varphi_k$ von der Bake ausgehenden Strahl befinden (vgl. gestrichelte Linie). In der realen Welt kommt es zu bei der Winkelmessung zu Abweichungen. Der unter dem gemessenen Winkel $\varphi_k$ von der Bake B ausgehende Strahl läuft im Abstand $d_k$ am Empfänger vorbei.

**Bezugszeichenliste**

B          Positionsbake, Bake

D          Demodulator

F          Matched Filter

G          Signalgenerator

| | |
|---|---|
| P | Nachverarbeitung |
| S | Sender |
| U | Übertragungsmedium |
| V | Einzelsendevorrichtung |
| W | individuelle Konditionierung |
| IR | Infrarot |
| $\varphi_0$ | Richtungs- und Abstrahlungswinkel |
| Re | Realteil (mathematisch) |
| j | imaginäre Einheit |
| $c_0$ | Komplexer Dämpfungsfaktor |
| $f_c$ | Trägerfrequenz |
| t | Zeit |
| $\tau_{k,m}[i,n]$ | Verzögerungszeit |
| $x_s(t)$ | Sendesignal |
| $x(t)$ | komplexe Einhüllende oder Basisbandsignal zu $x_s(t)$ |
| $\varphi[i,n]$ | Hauptstrahlrichtung |
| I | Abschnittselemente |
| N | Abschnitte |
| I·N | Anzahl der Sendekanäle |
| I·M | Anzahl der Zeitabschnitte |
| [i,n] | Kanal |
| [k,m] | Zeitabschnitt |
| $a[i,n](\varphi)$ | Abstrahlcharakteristik |
| $x[i,n](t)$ | Sendesignal eines Kanals |
| $x_{k,m}(t)$ | Teilsignal, Signalabschnitte |
| $h_{k,m}[i,n]$ | Verstärkungsfaktor |
| $x(t,\varphi)$ | richtungsabhängiges Sendesignal |
| y(t) | Empfangssignal |
| s | Verschiebung |

$v_{k,m}$      Abtastwert einer periodischen Funktion / Koeffizient

**Patentansprüche**

1. Verfahren zur Erzeugung eines Sendesignals mit richtungsabhängiger Modulation, wobei Einzelsignale einer Anzahl von Sendekanälen mit richtungsabhängiger Abstrahlcharakteristik additiv überlagert werden.

2. Verfahren zur Erzeugung eines Sendesignals mit richtungsabhängiger Modulation nach Anspruch 1, **dadurch gekennzeichnet, dass** das richtungsabhängige Sendesignal x(t,φ) durch additive Überlagerung der Kanäle unter Berücksichtigung ihrer

   Richtcharakteristik $x(t,\varphi) = \sum_{n=0}^{N-1} \sum_{i=0}^{I-1} a\left(\varphi - \frac{2\pi(i+nI)}{NI}\right) \sum_{m=0}^{M-1} \sum_{k=0}^{I-1} x_{k,m}(t) h_{k,m}[i,n]$ .

   erfolgt

3. Verfahren zur Erzeugung eines Sendesignals mit richtungsabhängiger Modulation nach Anspruch 2, **dadurch gekennzeichnet, dass**

   die Verstärkungsfaktoren $h_{k,m}[i,n]$ entsprechend der Funktion $h_{k,m}[i,n] = h\left(k - i + \frac{m}{M}\right)$ erzeugt werden.

4. Verfahren zur Erzeugung eines Sendesignals mit richtungsabhängiger Modulation nach Anspruch 2 oder 3, **dadurch gekennzeichnet, dass** das für alle Verstärkungsfaktoren $h_{k,m}[i,n] = e^{-j2\pi f c\tau k,m[i,n]}$ gilt, wobei der Betrag für alle $k,m,i,n$ konstant ist, wodurch der Verstärkungsfaktor mit einer Verzögerungszeit $\tau_{k,m}[i,n]$ korrespondiert.

5. Verfahren zur Erzeugung eines Sendesignals mit richtungsabhängiger Modulation nach Anspruch 4, **dadurch gekennzeichnet, dass** das reelle Signal an einer Stelle zentral erzeugt wird und einzelnen Sendekanälen mit unterschiedlicher Zeitverzögerung zugeführt wird, wobei die Zeitverzögerung bevorzugt zunächst von Kanal zu Kanal zu- bzw. abnimmt und im Anschluss ab- bzw. zunimmt.

6. Verfahren zur Bestimmung des Richtungswinkels aus einem gemäß dem Verfahren nach einem der Ansprüche 1 bis 5 erzeugten richtungsabhängig modulierten Signals, **dadurch gekennzeichnet, dass**

   $$y(t) = c_0 \, x(t,\varphi_0) = c_0 \sum_{m=0}^{M-1} \sum_{k=0}^{I-1} x_{k,m}(t) r_{k,m}(\varphi_0)$$
   das empfangene Signal

   bzw. $y(t) = \sum_{m=0}^{M-1} \sum_{k=0}^{I-1} x_{k,m}(t) v_{k,m}(\varphi_0)$ entspricht, wobei

   die Teilsignale $x_{k,m}(t)$ im Empfänger vorgegeben sind
   oder
   aus dem empfangenen Signal rekonstruiert werden,
   wobei $x_{k,m}(t)$ ein digital moduliertes Signal ist, dessen Verfahren invariant gegen den Faktor :$c_0 r_{k,m}(\varphi_0)$ ist, und mittels Korrelation oder mit Hilfe eines Matched Filters aus dem Empfangssignal die Faktoren $v_{k,m}(\varphi_0) = c_0 r_{k,m}(\varphi_0)$ zurück gewonnen werden,
   wobei
   in einem ersten Schritt das Bestimmen der Koeffizienten $v_{k,m}$ erfolgt, in einem zweiten Schritt das Bestimmen der Größe $f = j\frac{1}{M}\sum_{m=0}^{M-1}\sum_{k=0}^{I-1}\psi_{k,m}e^{-j\frac{2\pi(m+kM)}{IM}}$

aus den komplexen Phasen
$\psi_{k,m}$ = arg($v_{k,m}$) erfolgt
und
abschließend das Bestimmen des Winkels entsprechend

$\varphi_0 = \frac{2\pi s_1}{I} - \frac{1}{N}\arg(f)$ erfolgt.

**7.** Verfahren zur Bestimmung des Richtungswinkels aus einem gemäß dem Verfahren nach Anspruch 5 erzeugten richtungsabhängig modulierten Signals, insbesondere unter Beachtung von Anspruch 6 oder nach Anspruch 6,
**dadurch gekennzeichnet, dass**
Zeitverzögerungen $v_{k,m}$ in dem Empfänger gemessen werden, wobei diese unter Heranziehung eines Proportionalitätsfaktors mit den $\psi_{k,m}$ übereinstimmen.

**8.** Anordnung zur Erzeugung eines richtungsabhängig modulierten Signals, insbesondere gemäß einem Verfahren nach Anspruch 1 bis 5,
wobei
radial um einen gemeinsamen Punkt mindestens zwei, bevorzugt mindestens 16 Einzelsendevorrichtungen (V) auf einem Kreis oder einer Kugeloberfläche angeordnet und ausgerichtet sind,
die Einzelsendevorrichtung (V) eine richtungsabhängige Abstrahlcharakteristik aufweisen,
ein gemeinsamer Signalgenerator (G) vorgesehen ist, der ein Signal erzeugt,
und mindestens eine Konditionierungseinheit (W) vorgesehen ist, die das Signal des Signalgenerators (G) vor der Weiterleitung an die Einzelsendungsvorrichtungen (V) entsprechend einem Muster konditioniert.

**9.** Anordnung zur Erzeugung eines richtungsabhängig modulierten Signals nach Anspruch 8,
**dadurch gekennzeichnet, dass**
die Konditionierungseinheit (W) derart ausgebildet ist, dass das Sendesignal durch Multiplikation mit komplexen Verstärkungsfaktoren, die für verschiedene Kanäle und Zeitabschnitte unterschiedliche Werte annehmen, konditionierbar ist, wobei das Signal entsprechend $x[i,n](t) = \sum_{m=0}^{M-1}\sum_{k=0}^{I-1}x_{k,m}(t)h_{k,m}[i,n]$

konditioniert wird.

**10.** Anordnung zur Erzeugung eines richtungsabhängig modulierten Signals, nach Anspruch 8 oder 9,
**dadurch gekennzeichnet, dass**
die Einzelsendevorrichtungen (V) Infrarotsender sind.

**11.** Anordnung zur Bestimmung des Richtungswinkels, insbesondere gemäß dem Verfahren zur Bestimmung des Richtungswinkels nach Anspruch 6 oder 7, aus einem gemäß dem Verfahren nach einem der Ansprüche 1 bis 5 erzeugten richtungsabhängig modulierten Signals,
**dadurch gekennzeichnet, dass**
der Empfänger (E) eine Infrarotempfängereinheit, bevorzugt eine omnidirektionale Infrarotempfängereinheit und/oder eine Mikrocontrollereinheit, besonders bevorzugt ausgestattet mit einer Triangulationsberechnungsfunktion, aufweist.

**12.** Ortungssystem zur Positionsbestimmung eines Objektes, Körpers und/oder einer Person innerhalb eines Ortungsbereiches, besonders anwendbar in geschlossenen Räumen,
umfassend

- mindestens einen, besonders bevorzugt mindestens drei Sender (S), bevorzugt ausgestaltet als Positionsbaken (B), wobei die Sender (S) richtungsabhängige Sendesignale (x(t,φ)) ausstrahlend ausgebildet sind, und über den Ortungsbereich verteilt angeordnet sind,
- und einem Empfänger (E), bevorzugt an dem Objekt, dem Körper und/oder der Person,

wobei der Empfänger das/die richtungsabhängigen Sendesignale (x(t,φ)) der Positionsbaken (B) empfangend und auswertend ausgebildet ist,

wobei zur Auswertung eine Auswerteeinheit in oder an dem Empfänger (E) angeordnet ist, die mittels der richtungsabhängigen Sendesignale (x(t,φ)) den / die zugehörigen Richtungswinkel ($\varphi_0$) bestimmt und den Aufenthaltsbereich oder bei mindestens zwei vorgesehenen Sendern (S) über eine Triangulation den eigenen Standort berechnet.

13. Ortungssystem nach Anspruch 12
**dadurch gekennzeichnet, dass**
der oder die Sender (S) jeweils eine Anordnung zur Erzeugung eines richtungsabhängig modulierten Signals nach einem der Ansprüche 8 bis 10 ist.

14. Ortungssystem nach Anspruch 12 oder 13,
**dadurch gekennzeichnet, dass**
der Empfänger (E) eine Anordnung zur Bestimmung des Richtungswinkels, insbesondere gemäß dem Verfahren zur Bestimmung des Richtungswinkels nach Anspruch 6 oder 7, aus einem gemäß dem Verfahren nach einem der Ansprüche 1 bis 5 erzeugten richtungsabhängig modulierten Signals ist.

15. Ortungssystem nach Anspruch 12, 13 oder 14,
**dadurch gekennzeichnet, dass**
jede Positionsbake (B) ein festes vorgegebenes Zeitfenster zum Senden hat, in dem die Positionsbake (B) Signale aussendet, und/oder die Positionsbaken (B) untereinander synchronisiert sind, wobei nie zwei Positionsbaken (B) gleichzeitig senden.

16. Ortungssystem nach Anspruch 12, 13, 14 oder 15,
**dadurch gekennzeichnet, dass**
jede Positionsbake (B) über das abgestrahlte Signal die eigene Position übermittelt.

17. Ortungssystem nach einem der Ansprüche 12 bis 16,
**dadurch gekennzeichnet, dass**
jede Positionsbake (B) mit den benachbarten und empfangbaren Positionsbaken (B) kommunizierbar, insbesondere zeitlich synchronisierbar, ausgebildet ist und eine entsprechende Kommunikation zwischen diesen erfolgt, wobei insbesondere eine Synchronisation erfolgt und entsprechende Zeitfenster kommuniziert werden.

$x(t,\varphi)$

$\varphi_0$

U

$y(t,\varphi_0)$

E

S

Fig. 1

Fig. 2

Fig. 3

Fig. 4

Fig. 5

Fig. 6

**Europäisches Patentamt**
**European Patent Office**
**Office européen des brevets**

# EUROPÄISCHER RECHERCHENBERICHT

Nummer der Anmeldung

EP 12 15 8548

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 102 084 A2 (DEUTSCH ZENTR LUFT & RAUMFAHRT [DE]) 23. Mai 2001 (2001-05-23) * Absätze [0011] - [0021] * * Absätze [0023] - [0029] * ----- | 1-17 | INV. G01S1/12 G01S1/64 G01S1/82 |
| X | DE 35 26 564 A1 (KRUPP GMBH [DE]) 5. Februar 1987 (1987-02-05) * Spalte 3, Zeile 35 - Spalte 6, Zeile 67 * ----- | 1-17 | |
| X | DE 102 00 676 A1 (SIEMENS AG [DE]) 24. Juli 2003 (2003-07-24) * Absätze [0035] - [0039] * * Absatz [0041] * ----- | 1-17 | |
| X | WO 2009/016152 A1 (BSH BOSCH SIEMENS HAUSGERAETE [DE]; MAASE JENS [DE]; HIRSCHFELD DIANE) 5. Februar 2009 (2009-02-05) * Seite 7, Zeile 20 - Seite 10, Zeile 32 * * Abbildung 2 * ----- | 1-17 | |
| X | US 2009/243896 A1 (MUSAT CIPRIAN [FR] ET AL) 1. Oktober 2009 (2009-10-01) * Absätze [0012] - [0025] * * Absätze [0041] - [0046] * * Absatz [0050] * ----- | 1-17 | RECHERCHIERTE SACHGEBIETE (IPC) G01S |
| X | DE 10 2007 036220 A1 (BSH BOSCH SIEMENS HAUSGERAETE [DE]) 5. Februar 2009 (2009-02-05) * Absätze [0002], [0017], [0022], [0023] * ----- | 8-10 | |

Der vorliegende Recherchenbericht wurde für alle Patentansprüche erstellt

| Recherchenort | Abschlußdatum der Recherche | Prüfer |
|---|---|---|
| München | 17. Juli 2012 | Hirsch, Stefanie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 12 15 8548

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-07-2012

| Im Recherchenbericht angeführtes Patentdokument | Datum der Veröffentlichung | Mitglied(er) der Patentfamilie | Datum der Veröffentlichung |
|---|---|---|---|
| EP 1102084 A2 | 23-05-2001 | AT 264511 T<br>DE 19955044 A1<br>EP 1102084 A2 | 15-04-2004<br>09-08-2001<br>23-05-2001 |
| DE 3526564 A1 | 05-02-1987 | KEINE | |
| DE 10200676 A1 | 24-07-2003 | KEINE | |
| WO 2009016152 A1 | 05-02-2009 | AT 495462 T<br>DE 102007036230 A1<br>EP 2176676 A1<br>ES 2357680 T3<br>WO 2009016152 A1 | 15-01-2011<br>12-02-2009<br>21-04-2010<br>28-04-2011<br>05-02-2009 |
| US 2009243896 A1 | 01-10-2009 | FR 2929412 A1<br>US 2009243896 A1 | 02-10-2009<br>01-10-2009 |
| DE 102007036220 A1 | 05-02-2009 | KEINE | |

EPO FORM P0461

Für nähere Einzelheiten zu diesem Anhang : siehe Amtsblatt des Europäischen Patentamts, Nr.12/82